# EUROPEAN PATENT APPLICATION

(11) **EP 4 815 493 A1**
(43) Date of publication of application: **30.09.2026**
(21) Application number: 24902436.5
(22) Date of filing: 05.11.2024
(51) Int. Cl.: H04Q 11/00

(54) **SIGNAL PROCESSING APPARATUS AND OPTICAL NETWORK**

(30) Priority: 15.12.2023 CN 202311737313
(71) Applicant: Huawei Technologies Co., Ltd., Shenzhen, Guangdong 518129 (CN)
(72) Inventor: REN, Yang, Shenzhen, Guangdong 518129 (CN); LIU, Zhishuang, Shenzhen, Guangdong 518129 (CN); SONG, Xiaolu, Shenzhen, Guangdong 518129 (CN); XIAO, Xinhua, Shenzhen, Guangdong 518129 (CN)
(74) Representative: Körber, Martin Hans
(86) International application number: PCT/CN2024/129961
(87) International publication number: WO 2025/124012

(57) **Abstract**

A signal processing apparatus and an optical network are provided, relating to the field of optical communication. The signal processing apparatus can reduce a transmission loss of the optical network. The signal processing apparatus includes a control circuit and a first optical splitter, and the first optical splitter includes a common port and a plurality of branch ports. The common port of the first optical splitter is configured to connect to a first optical line terminal, a first branch port of the plurality of branch ports of the first optical splitter is configured to connect to a first optical network unit, and a second branch port of the plurality of branch ports of the first optical splitter is configured to connect to a second optical network unit. The control circuit sends a first control signal to the first optical splitter, to control the first optical splitter to connect the common port to the first branch port; and the control circuit sends a second control signal to the first optical splitter, to control the first optical splitter to connect the common port to the second branch port. Embodiments of this application are applied to the field of optical communication.

## Description

This application claims priority to Chinese Patent Application No. 202311737313.0, filed with the China National Intellectual Property Administration on December 15, 2023 and entitled "SIGNAL PROCESSING APPARATUS AND OPTICAL NETWORK", which is incorporated herein by reference in its entirety.

### TECHNICAL FIELD

This application relates to the field of optical communication, and in particular, to a signal processing apparatus and an optical network.

### BACKGROUND

An optical fiber access technology is a technology for implementing signal transmission using an optical fiber as a transmission medium. For example, in a fiber to the x (fiber to the x, FTTx) network, signal transmission is implemented between a central office (for example, a central control station) and users via an optical fiber. The optical fiber has been widely used in various scenarios because of its small volume, low price, and long transmission distance. The optical fiber access technology includes an active optical access technology and a passive optical access technology.

Specifically, a passive optical network (passive optical network, PON) is a typical point-to-multipoint (point-to-multipoint, PTMP) network. It includes an optical line terminal (optical line terminal, OLT) located at a central office, and an optical network terminal (optical network terminal, ONT) or an optical network unit (optical network unit, ONU) located at a user end; and further includes an optical distribution network (optical distribution network, ODN) connecting the OLT and the ONU (or the ONT). Generally, the PON implements signal transmission in a broadcast (downstream direction) manner and a time division multiple access (time division multiple access, TDMA) (upstream direction) manner. The ODN enables broadcast of signals in the downstream direction, and the ODN is mostly implemented by a passive optical splitter (for example, a 1:N passive optical splitter, where N is a positive integer greater than or equal to 2). The ODN performs 1:N optical splitting on the signal in the downstream direction. Therefore, the transmission loss is not negligible.

### SUMMARY

This application provides a signal processing apparatus and an optical network. The signal processing apparatus can reduce a transmission loss of the optical network.

According to a first aspect, a signal processing apparatus is provided. In terms of structure, the signal processing apparatus includes a control circuit and a first optical splitter, and the first optical splitter includes a common port and a plurality of branch ports. The common port of the first optical splitter is configured to connect to a first OLT, a first branch port of the plurality of branch ports of the first optical splitter is configured to connect to a first ONU, and a second branch port of the plurality of branch ports of the first optical splitter is configured to connect to a second ONU. In terms of functions, the control circuit is configured to send a first control signal to the first optical splitter, the first optical splitter is configured to connect the common port of the first optical splitter to the first branch port of the first optical splitter in response to the first control signal, the control circuit is further configured to send a second control signal to the first optical splitter, and the first optical splitter is configured to connect the common port of the first optical splitter to the second branch port of the first optical splitter in response to the second control signal.

In this case, based on the foregoing solution, the optical splitter can connect the common port to the first branch port in response to the control signal sent by the control circuit, or switch to connect the common port to the second branch port. Specifically, a downstream direction is used as an example. The optical splitter receives, through the common port, an optical signal transmitted by the first OLT. Further, in response to the first control signal sent by the control circuit, the optical splitter outputs, in a period of time through the first branch port connected to the common port, the optical signal received by the common port to the first ONU; and in response to the second control signal sent by the control circuit, the optical splitter outputs, in another period of time through the second branch port connected to the common port, the optical signal received by the common port to the second ONU. In a possible implementation, the optical splitter further includes more branch ports, and any branch port is configured to connect to an ONU. In this way, the optical splitter can output, in a period of time through a branch port connected to the common port, the optical signal received by the common port to an ONU connected to the branch port. It is not difficult to understand that control signals (including the first control signal and the second control signal) sent by the control circuit may be generated by an OLT, or may be generated by another device or apparatus and then transmitted to the control circuit via the OLT. This is not limited in this application. In this case, in the foregoing solution, an optical signal transmitted by the OLT does not need to be split, and all optical signals received from the OLT can be output to the ONU in different time periods through the branch port connected to the common port. In addition, in this case, other branch ports of the optical splitter are all disconnected from the common port of the optical splitter, so that point-to-point transmission is implemented between the OLT and the ONU. This greatly reduces a transmission loss. In addition, in an upstream direction, in a period of time, in the foregoing solution, an optical signal output by an ONU connected to a branch port can be received through the branch port, and then the optical signal is transmitted to the OLT through the common port connected to the branch port. In addition, in this case, other branch ports of the optical splitter are all disconnected from the common port of the optical splitter. In this case, based on the foregoing solution, a rogue ONU can be avoided in an upstream signal transmission process. This effectively improves transmission quality.

In a possible implementation, the signal processing apparatus further includes a receiver circuit, and the receiver circuit is configured to connect to the first OLT. In terms of functions, the receiver circuit is configured to receive a first optical signal sent by the first OLT, where the first optical signal carries port allocation information; the receiver circuit is further configured to obtain the port allocation information from the first optical signal, and send the port allocation information to the control circuit; and the control circuit is specifically configured to generate the first control signal and the second control signal based on the port allocation information.

In this case, in the foregoing solution, the control circuit can be connected to the OLT through the receiver circuit. Specifically, the receiver circuit receives an optical signal (the first optical signal) transmitted by the OLT, obtains the port allocation information from the optical signal, and sends the port allocation information to the control circuit; and the control circuit generates the control signal based on the port allocation information. Based on the foregoing solution, the port allocation information can be obtained based on the optical signal transmitted by the OLT; and the control circuit can be connected to the OLT via the receiver circuit, and receive the port allocation information used to generate the control information. The receiver circuit may be an ONU or an ONT, or may be another apparatus or device that can implement a function of the receiver circuit. This is not limited in this application. Generally, in a communication network, an optical fiber serves as a transmission medium, and an optical signal is transmitted via the optical fiber to implement communication. In this case, based on the foregoing solution, the signal processing apparatus provided in this application can be compatible with an architecture of an existing communication network, and compatibility of the solution is higher. This effectively reduces complexity and deployment costs of the communication network.

In a possible implementation, the signal processing apparatus further includes a transmitter circuit, and the transmitter circuit is configured to connect to the first OLT. In terms of functions, the first optical splitter is further configured to send detection results of optical signals of the plurality of branch ports to the control circuit, the control circuit is further configured to send port status information to the transmitter circuit based on the detection results, and the transmitter circuit is further configured to send the port status information to the first OLT.

Therefore, in the foregoing solution, the port status information of the optical splitter can be sent to the OLT via the transmitter circuit. Specifically, the optical splitter sends the detection results of the optical signals of the plurality of branch ports to the control circuit, and the control circuit sends the port status information to the transmitter circuit based on the detection results. The port status information indicates statuses of the plurality of branch ports. For example, the port status information can indicate whether a connection between a branch port and the common port is abnormal. For another example, the port status information may further indicate whether a branch port is used to transmit an optical signal in a period of time indicated by the port allocation information. In a possible implementation, the detection result sent by the optical splitter to the control circuit may be parameters (for example, power of the optical signal and strength of the optical signal) of the optical signal detected at each branch port of the optical splitter. Optionally, a detection circuit (for example, may be an optical-to-electrical conversion circuit including a photodiode (photodiode, PD)) disposed at each branch port of the optical splitter is used to detect the optical signal of the branch port, to obtain the detection results of the optical signals of the plurality of branch ports of the optical splitter. It should be noted that the foregoing transmitter circuit and the receiver circuit included in the signal processing apparatus in another solution of this application may be independent circuits, or may be integrated into a transceiver circuit having a transceiver function. In this case, based on the foregoing solution, the OLT can learn of, in time based on the received port status information, connectivity statuses of the plurality of branch ports included in the optical splitter, to adjust signal transmission between the OLT and the ONU. This improves transmission quality.

In a possible implementation, the first optical splitter is specifically configured to: in response to the first control signal, connect the common port to the first branch port in a first slot; and in response to the second control signal, connect the common port to the second branch port in a second slot indicated by the port allocation information.

In this case, based on the foregoing solution, the optical splitter can connect the common port to the first branch port in the indicated first slot and connect the common port to the second branch port in the indicated second slot based on the control signals. Generally, the optical splitter includes the plurality of branch ports. In a possible implementation, the port allocation information includes slot indication information indicating the optical splitter to connect the common port to a branch port. In this way, the optical splitter can connect the common port to a branch port in a period of time (for example, may be in an allocated slot of the branch port) based on slot indication information. Specifically, the downstream direction is used as an example. The optical splitter receives an optical signal through the common port. Further, the optical splitter outputs, based on slot indication information included in the control signals, the received optical signal in a corresponding period of time (for example, the first slot) through the first branch port connected to the common port; and outputs, in another period of time (for example, the second slot), the received optical signal through the second branch port connected to the common port. Optionally, the port allocation information may include a plurality of pieces of slot indication information, and any piece of slot indication information indicates only one slot (for example, the first slot or the second slot). Alternatively, the port allocation information may further include one piece of slot indication information, and the slot indication information can indicate a plurality of slots (for example, the first slot and the second slot). This is not limited in this application. In this case, based on the foregoing solution, the optical splitter can connect, based on slot indication information included in a control signal, the common port to a branch port in an indicated slot, so that the optical signal transmitted by the OLT can be transmitted to a connected ONU in the slot through a branch port, and the OLT is disconnected from another ONU in the slot. This effectively reduces a transmission loss.

In a possible implementation, the common port of the first optical splitter is configured to connect to the first OLT through a first combining and dividing apparatus; and the first combining and dividing apparatus includes a common port, a first branch port, and a second branch port, where the common port of the first combining and dividing apparatus is configured to connect to the first OLT, the first branch port of the first combining and dividing apparatus is configured to connect to the common port of the first optical splitter, and the second branch port of the first combining and dividing apparatus is configured to connect to the receiver circuit.

In this case, in the foregoing solution, the optical signal transmitted by the OLT can be separately transmitted to the optical splitter and the receiver circuit via the combining and dividing apparatus. Specifically, the combining and dividing apparatus receives, through the common port, the optical signal transmitted by the OLT, transmits, through the first branch port, the optical signal transmitted by the OLT to the optical splitter, and transmits, through the second branch port, the optical signal transmitted by the OLT to the receiver circuit. The receiver circuit can obtain the port allocation information from the received optical signal and send the port allocation information to the control circuit. The control circuit generates and sends the control signal. Further, the optical splitter can control, based on the received control signal, to connect the common port of the optical splitter to the corresponding branch port to transmit the optical signal. In a possible implementation, the combining and dividing apparatus may further split the optical signal received from the OLT. A specific manner or step of splitting the optical signal is not limited in this application. In this case, in the foregoing solution, the optical signal transmitted by the OLT can be separately transmitted to the receiver circuit and the optical splitter, and the optical splitter is controlled by using the port allocation information obtained by the receiver circuit, so that time consumed for connecting the common port of the optical splitter to a branch port is less, and transmission quality is ensured.

In a possible implementation, a split ratio of the first branch port of the first combining and dividing apparatus is greater than a split ratio of the second branch port of the first combining and dividing apparatus.

In this case, in the foregoing solution, the combining and dividing apparatus can transmit a large part of the optical signal transmitted by the OLT to the optical splitter, and transmit a small part of the optical signal transmitted by the OLT to the receiver circuit. Optionally, the combining and dividing apparatus may transmit 1% of the optical signal transmitted by the OLT to the optical splitter, and transmit 99% of the optical signal transmitted by the OLT to the receiver circuit based on a split ratio of 1:99. In this way, the control signal sent by the control circuit is obtained based on one channel of optical signal with low optical power (for example, a proportion of 1%) transmitted by the OLT. In response to the control signal, the optical splitter can output, through a branch port, the other channel of optical signal with high optical power (for example, a proportion of 99%) transmitted by the OLT. In this case, in the foregoing solution, via the combining and dividing apparatus, the optical signal transmitted by the OLT can be split into a part of the optical signal that occupies a large proportion and the other part of the optical signal that occupies a small proportion based on a specific split ratio. The part of the optical signal that occupies the small proportion can be used to generate a control signal, to control, by using the control signal, transmission of the other part of the optical signal that occupies the large proportion.

In a possible implementation, the first combining and dividing apparatus includes an optical switch or a multiplexer/demultiplexer.

In this case, in the foregoing solution, the optical signal transmitted by the OLT can be split via the optical switch or the multiplexer/demultiplexer, so that the optical signal can be separately transmitted to the optical splitter and the receiver circuit. Certainly, the combining and dividing apparatus may alternatively be another device or apparatus that can implement a function of the combining and dividing apparatus. This is not limited in this application.

In a possible implementation, in terms of structure, the signal processing apparatus further includes a second optical splitter, the common port of the first optical splitter is configured to connect to the first OLT through a second combining and dividing apparatus, a common port of the second optical splitter is configured to connect to the first OLT via the second combining and dividing apparatus, a common port of the second combining and dividing apparatus is configured to connect to the first OLT, a first branch port of the second combining and dividing apparatus is configured to connect to the common port of the first optical splitter, a second branch port of the second combining and dividing apparatus is configured to connect to the common port of the second optical splitter, the first branch port of the first optical splitter is configured to connect to a first branch port of a third combining and dividing apparatus, a first branch port of the second optical splitter is configured to connect to a second branch port of the third combining and dividing apparatus, the second branch port of the first optical splitter is configured to connect to a first branch port of a fourth combining and dividing apparatus, a second branch port of the second optical splitter is configured to connect to a second branch port of the fourth combining and dividing apparatus, a common port of the third combining and dividing apparatus is configured to connect to the first ONU, and a common port of the fourth combining and dividing apparatus is configured to connect to the second ONU. In terms of functions, the control circuit is further configured to send a third control signal to the second optical splitter; the second optical splitter is configured to connect the common port of the second optical splitter to the first branch port of the second optical splitter in response to the third control signal; the control circuit is further configured to send a fourth control signal to the second optical splitter; the second optical splitter is configured to connect the common port of the second optical splitter to the second branch port of the second optical splitter in response to the fourth control signal; an optical signal of a first band is transmitted between the common port of the second combining and dividing apparatus and the first branch port of the second combining and dividing apparatus; and an optical signal of a second band is transmitted between the common port of the second combining and dividing apparatus and the second branch port of the second combining and dividing apparatus, where the first band and the second band are non-overlapping.

Therefore, in the foregoing solution, the second combining and dividing apparatus can split the optical signal transmitted by the OLT into optical signals of two non-intersecting bands, so that the optical signal of one band (the first band) is transmitted to an ONU via the first optical splitter and the third combining and dividing apparatus, and the optical signal of the other band (the second band) is transmitted to an ONU via the second optical splitter and the fourth combining and dividing apparatus. Specifically, the optical signal output by the OLT is split into the optical signals of the two non-intersecting bands (namely, the first band and the second band) via the second combining and dividing apparatus. The optical signal of the first band is transmitted to the first optical splitter through the first branch port of the second combining and dividing apparatus, and the optical signal of the second band is transmitted to the second optical splitter through the second branch port of the second combining and dividing apparatus. Further, the first optical splitter transmits the optical signal of the first band to the ONU (the first ONU) via the third combining and dividing apparatus connected to the first branch port of the first optical splitter, and the first optical splitter transmits the optical signal of the first band to the ONU (the second ONU) via the fourth combining and dividing apparatus connected to the second branch port of the first optical splitter. In a possible implementation, the optical signal of the first band may be an optical signal transmitted by the OLT in the downstream direction, and the optical signal of the second band may be an optical signal transmitted by the OLT in the upstream direction. For an optical signal transmission process in the upstream direction (namely, a transmission process of the optical signal of the second band), refer to the foregoing process. Details are not described herein again. In this way, one optical splitter can implement signal transmission between the OLT and the ONU in one direction (for example, the upstream direction or the downstream direction). Certainly, the optical signal of the first band may alternatively be a part of the optical signal transmitted by the OLT, and the optical signal of the second band may alternatively be the other part of the optical signal transmitted by the OLT. This is not limited in this application. In this case, based on the foregoing solution, optical signal transmission between the OLT and any ONU (or ONT) can be controlled in different directions (the upstream direction and the downstream direction), to adapt to different scenario requirements.

In a possible implementation, the first optical splitter includes an optical switch.

In a possible implementation, the second optical splitter includes an optical switch.

In this case, the first optical splitter may be implemented via the optical switch, and/or the second optical splitter may be implemented via the optical switch. Optionally, the optical switch includes one common port and at least N (N is greater than or equal to 4) branch ports, that is, the optical switch is of a 1:N architecture. A delay of performing port configuration (that is, connecting the common port to a branch port) by the optical switch does not exceed 10 milliseconds (millisecond, ms). Because the delay of performing port configuration is unavailable time of the port of the optical switch, if the unavailable time of the port of the optical switch is high, availability and usability of the signal processing apparatus are reduced. Further, a delay of a control module (for example, the control circuit) that controls the optical switch to implement port configuration also needs to be less than 10 ms, to ensure that the delay matches a delay requirement (not exceeding 10 ms) of the port configuration of the optical switch. In some other examples, the optical switch is a waveguide optical switch, for example, may be an optical switch structure and a network that are formed based on a waveguide structure prepared based on a common semiconductor process platform such as silicon, silicon nitride, silicon dioxide, or lithium niobate. Generally, optical fibers connected to the common port and the branch port of the optical switch are single-mode optical fibers instead of polarization-maintaining optical fibers. Therefore, the optical switch needs to be polarization-independent. In addition, when a response of the optical switch has a polarization-sensitive characteristic, a polarization controller needs to be connected before the optical switch, to compensate for a time-varying polarization state in the optical fiber. The polarization controller and the optical switch may be integrated on a chip based on a same semiconductor material platform, or the polarization controller may be implemented by connecting the optical fiber to an external discrete controller. The foregoing example is merely a possible implementation of the optical switch. A specific structure, an apparatus structure, and the like of the optical switch are not limited in this application.

In a possible implementation, the second combining and dividing apparatus includes an optical switch or a multiplexer/demultiplexer.

In a possible implementation, the third combining and dividing apparatus includes an optical switch or a multiplexer/demultiplexer.

In a possible implementation, the fourth combining and dividing apparatus includes an optical switch or a multiplexer/demultiplexer.

It should be noted that the combining and dividing apparatuses (including the first combining and dividing apparatus, the second combining and dividing apparatus, the third combining and dividing apparatus, and the fourth combining and dividing apparatus) may be integrated into a chip (that is, an integrated circuit integrated inside a chip), or may be integrated outside a chip (that is, an integrated circuit integrated outside a chip), for example, integrated into an external device. An implementation, a product form, and the like of the combining and dividing apparatus are not limited in this application.

According to a second aspect, an optical network is provided. The optical network includes a first OLT, a first ONU, a second ONU, and the signal processing apparatus according to the first aspect.

In a possible implementation, the optical network further includes a second combining and dividing apparatus, a third combining and dividing apparatus, and a fourth combining and dividing apparatus.

In a possible implementation, the optical network further includes a second OLT and a fifth combining and dividing apparatus, where a first branch port of the fifth combining and dividing apparatus is configured to connect to the first OLT, a second branch port of the fifth combining and dividing apparatus is configured to connect to the second OLT, and a common port of the fifth combining and dividing apparatus is configured to connect to the signal processing apparatus.

In this case, in the foregoing solution, the combining and dividing apparatus can respectively receive, through the two branch ports, optical signals transmitted by the two OLTs, then combine the optical signals into one channel of optical signal, and transmit the optical signal to the signal processing apparatus. Specifically, the fifth combining and dividing apparatus receives, through the first branch port, an optical signal transmitted by the first OLT, and the fifth combining and dividing apparatus receives, through the second branch port, an optical signal transmitted by the second OLT, and outputs the received optical signals to the signal processing apparatus through the common port. In a possible implementation, the optical network may further include more combining and dividing apparatuses, configured to connect more OLTs. In a possible implementation, the combining and dividing apparatus may further include more branch ports, to connect to more OLTs. In this case, in the foregoing solution, the signal processing apparatus can be connected to more OLTs by adding deployed combining and dividing apparatuses, so that the signal processing apparatus provided in this application can adapt to more application scenarios, and a deployment solution of the optical network is more flexible.

In a possible implementation, the optical network further includes a ranging apparatus and a sixth combining and dividing apparatus, where a first branch port of the sixth combining and dividing apparatus is configured to connect to the first OLT, a second branch port of the sixth combining and dividing apparatus is configured to connect to the ranging apparatus, and a common port of the sixth combining and dividing apparatus is configured to connect to the signal processing apparatus.

Therefore, in the foregoing solution, the combining and dividing apparatus is separately connected to the OLT and the ranging apparatus through the branch ports. Specifically, the sixth combining and dividing apparatus can receive, through the first branch port, an optical signal transmitted by the first OLT, and the sixth combining and dividing apparatus can receive, through the second branch port, an optical signal transmitted by the ranging apparatus, and output the received optical signals to the signal processing apparatus through the common port. For example, the ranging apparatus may be implemented by an optical time-domain reflectometer. Certainly, the ranging apparatus may alternatively be implemented by another possible device or apparatus. This is not limited in this application. In a possible implementation, the combining and dividing apparatus may further include more branch ports, to connect to more communication apparatuses or devices. In this case, in the foregoing solution, the signal processing apparatus can be connected to more apparatuses or devices by adding deployed combining and dividing apparatuses. This further enriches an application scenario of the signal processing apparatus.

According to a third aspect, a signal processing method is provided. The signal processing method includes: sending a first control signal to a first optical splitter; connecting a common port of the first optical splitter to a first branch port of the first optical splitter in response to the first control signal; sending a second control signal to the first optical splitter; and connecting the common port of the first optical splitter to a second branch port of the first optical splitter in response to the second control signal.

In a possible implementation, a first optical signal sent by a first OLT is received, where the first optical signal carries port allocation information; the port allocation information is obtained from the first optical signal; and the first control signal and the second control signal are generated based on the port allocation information.

In a possible implementation, in response to the first control signal, the common port of the first optical splitter is connected to the first branch port of the first optical splitter in a first slot indicated by the port allocation information; and in response to the second control signal, the common port of the first optical splitter is connected to the second branch port of the first optical splitter in a second slot indicated by the port allocation information.

For technical effect brought by any design manner in the second aspect and the third aspect, refer to the technical effect brought by different design manners in the first aspect. Details are not described herein again.

### BRIEF DESCRIPTION OF DRAWINGS

FIG. 1 is a diagram of a passive optical network according to an embodiment of this application;
FIG. 2 is a diagram of a passive optical splitter according to an embodiment of this application;
FIG. 3 is a diagram of a passive optical network according to another embodiment of this application;
FIG. 4 is a diagram of a signal processing apparatus according to an embodiment of this application;
FIG. 5 is a diagram of a signal processing apparatus according to another embodiment of this application;
FIG. 6 is a diagram of signal transmission according to an embodiment of this application;
FIG. 7 is a diagram of a communication network according to an embodiment of this application;
FIG. 8 is a diagram of signal transmission according to another embodiment of this application;
FIG. 9 is a diagram of a communication network according to another embodiment of this application;
FIG. 10 is a diagram of signal transmission according to still another embodiment of this application;
FIG. 11 is a diagram of a communication network according to still another embodiment of this application;
FIG. 12 is a diagram of signal transmission according to yet another embodiment of this application;
FIG. 13 is a diagram of a communication network according to yet another embodiment of this application;
FIG. 14 is a diagram of a communication network according to still yet another of this application;
FIG. 15 is a diagram of a communication network according to a further embodiment of this application;
FIG. 16 is a diagram of a communication network according to a still further embodiment of this application; and
FIG. 17 is a diagram of a communication network according to a yet further embodiment of this application.

### DESCRIPTION OF EMBODIMENTS

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to accompanying drawings. In addition, a combination of these solutions may be used. It should be noted that, in embodiments of this application, the word like "example" or "for example" is used to represent giving an example, an illustration, or a description. Any embodiment or design scheme described as "example" or "for example" in embodiments of this application shall not be construed as being more preferred or having more advantages than another embodiment or design scheme. To be precise, use of the word like "example" or "for example" is intended to present a relative concept in a specific manner.

The following describes technical solutions of embodiments in this application with reference to the accompanying drawings.

An optical fiber access technology is a technology for implementing signal transmission using an optical fiber as a transmission medium. The optical fiber access technology includes active optical access and passive optical access. In a fiber to the x (fiber to the x, FTTx) network, signal transmission is implemented between a central office (for example, a central control station) and a user via an optical fiber. The optical fiber has been widely used in various scenarios because of its small volume, low price, and long transmission distance.

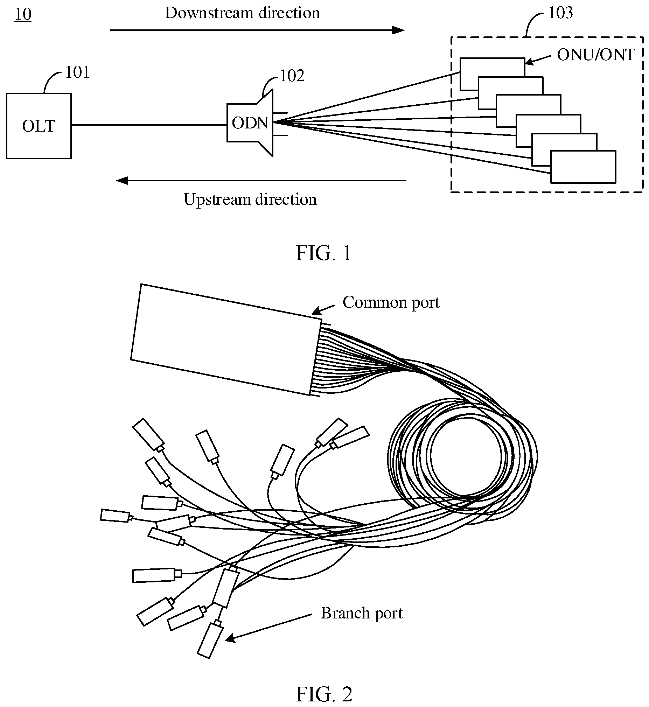

A passive optical network PON is a typical point-to-multipoint PTMP network. It includes an optical line terminal OLT at a central office, and an optical network terminal ONT or an optical network unit ONU at a user end; and further includes an optical distribution network ODN connecting the OLT and the ONU. For example, FIG. 1 is a diagram of a passive optical network according to an embodiment of this application. For ease of description, the passive optical network shown in FIG. 1 is represented as a PON 10. With reference to FIG. 1, the PON 10 includes an OLT 101, an ODN 102, and an ONU 103. The OLT is generally disposed on a network side (for example, may be the central control station at the central office), and the ONU 103 includes one or more disposed ONUs.

In embodiments of this application, an example in which the ONU is disposed on a user side is used for description. It is not difficult to understand that the ONT or the ONU is generally disposed at a distinct location on the user side (which may also be referred to as a terminal side), functions implemented by the ONT and the ONU are similar, and the ONT is generally considered as a component of the ONU. For ease of description, in the PON 10 shown in FIG. 1, only the ONU 103 is used as an example on the user side, and this should not constitute any limitation on a device type, a device quantity, and the like included in the PON.

A signal is generally transmitted in a broadcast manner in a downstream direction in the PON. The ODN is generally implemented by a passive optical splitter (for example, a 1:N passive optical splitter). Specifically, the OLT 101 at the central office outputs an optical signal, the optical signal is transmitted to the ODN 102 along an optical fiber, and the optical signal is separately transmitted to a plurality of ONUs in the ONUs 103 via the passive optical splitter ODN 102. Any one of the ONUs 103 selectively receives, by performing determining at a physical layer based on the received optical signal and a logical identifier allocated by the OLT 101, a data frame sent to the ONU from the received optical signal, and discards a data frame sent to another ONU.

A signal is usually transmitted in a time division multiple access TDMA manner in an upstream direction in the PON. Specifically, the ONUs in the ONUs 103 output, based on timestamps allocated by the OLT 101, optical signals in a preset sequence in allocated slots of the ONUs. The optical signals are transmitted to the ODN 102 along optical fibers, and are transmitted to the OLT 101 over the ODN 102.

With continuous development of related technologies, the PON develops from a Gigabit-capable passive optical network (Gigabit-capable passive optical network, GPON), to a 10 Gigabit-capable passive optical network (10 Gigabit-capable passive optical network, XGPON), then to a current 50 Gigabit-capable passive optical network (50 Gigabit-capable passive optical network, 50G-PON), and to a 100 G-PON (100 Gigabit-capable passive optical network) or even a 200 G-PON (200 Gigabit-capable passive optical network) that may exist in the future. A transmission rate and a bandwidth of the PON are continuously increased. However, this imposes higher requirements on a link budget (including power), a transmission delay, and the like of the PON.

It should be noted that the ODN generally includes one or more levels of optical splitters (a plurality of optical splitters are disposed), to implement multi-level optical splitting on the optical signal. Certainly, in some other examples, the optical splitter may further include more or fewer output ends. Herein, only the architecture shown in FIG. 1 is used as an example. In embodiments of this application, a quantity of optical splitters included in the ODN is not limited, and a quantity of output ports of each optical splitter is not limited.

Generally, the ODN in the PON is generally implemented by the passive optical splitter. For example, FIG. 2 is a diagram of a possible passive optical splitter according to an embodiment of this application. The passive optical splitter (also referred to as an optical splitter) is a passive device, and can implement splitting and combination of optical energy by receiving an optical signal without external energy. The optical splitter can allocate optical energy (for example, optical power and optical intensity) transmitted in one optical fiber to two or more optical fibers based on a given ratio, or combine optical energy transmitted in a plurality of optical fibers into one optical fiber.

Specifically, with reference to FIG. 2, the passive optical splitter is a 1:N optical splitter, and includes one common port and N branch ports. The passive optical splitter can receive, through the common port, the optical signal transmitted by the optical fiber, and distribute energy (for example, optical power) of the optical signal to N optical fibers through the N branch ports based on a ratio, so that the N optical fibers separately perform transmission. Alternatively, the passive optical splitter can also receive, through the N branch ports, optical signals transmitted by N optical fibers, and transmit the received optical signals to one optical fiber through the common port for transmission.

However, due to a characteristic of a manufacturing material of the passive optical splitter, the passive optical splitter has an inevitable intrinsic loss, which causes a high loss in an optical signal transmission process. For example, if the ODN is a 1:8 passive optical splitter, the intrinsic loss of the passive optical splitter is generally 9 dB; or if the ODN is a 1:16 passive optical splitter, the intrinsic loss of the passive optical splitter is generally 14 dB. Specifically, an example in which the ODN is a 1:8 passive optical splitter is used. In this case, optical power of an optical signal received by any ONU, connected to the ODN, on the user side is only 1/8 of optical power of the optical signal output by the OLT. It is not difficult to understand that a same loss exists in both an upstream direction and a downstream direction.

In addition, because the TDMA manner is used in the upstream direction in the PON, the OLT needs to periodically open a window to ensure that a newly connected ONU in the PON can be detected in time. This means that the OLT needs to stop signal transmission in the upstream direction at a specific interval, so that the newly accessed ONU can complete procedures such as registration and ranging of accessing the OLT. Generally, a window opening cycle of the OLT is 250 microseconds (microsecond, µs), which causes a periodic delay (the cycle is 250 µs) in signal transmission in the upstream direction. Consequently, a part of slots of the PON in the upstream direction are wasted, and the bandwidth of the PON network is reduced.

Because the signal is transmitted in the TDMA manner in the upstream direction in the PON, the ONUs send the optical signals in the corresponding sequence in the allocated slots of the ONUs. However, in some other examples, when any ONU sends an optical signal in an allocated slot that is not of the ONU, a conflict occurs with another ONU that is sending an optical signal in the allocated slot. This affects normal communication of the another ONU or even all ONUs. The ONU that sends the optical signal in the allocated slot that is not of the ONU is referred to as a rogue ONU.

Based on the foregoing descriptions, the inherent intrinsic loss of the passive optical splitter limits a further increase of the transmission rate of the PON, and may further hinder expansion of a user scale of the PON. In addition, there is a periodic delay in a signal transmission process in the PON. In addition, the rogue ONU cannot be effectively prevented.

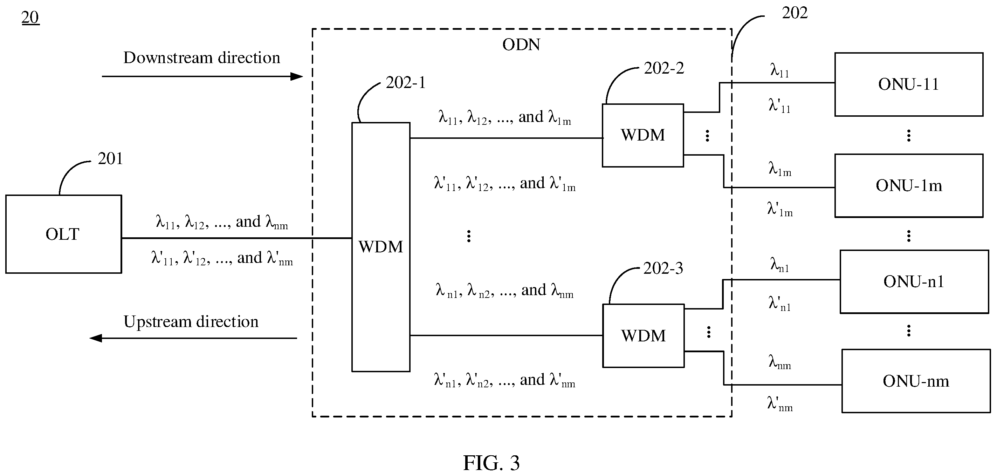

Based on the foregoing problems, improvement is implemented usually by using a wavelength division multiplexing (wavelength division multiplexing, WDM) technology, to be specific, one or more deployed WDMs are added to improve the foregoing problems. For example, FIG. 3 is a diagram of a passive optical network according to an embodiment of this application. For ease of description, the passive optical network shown in FIG. 3 is represented as a PON 20. With reference to FIG. 1, the PON 20 is a WDM-based PON network, and includes an OLT 201, an ODN 202, three wavelength division multiplexers WDMs (represented as a WDM 202-1, a WDM 202-2, and a WDM 202-3 in FIG. 3), and a plurality of ONUs (represented as an ONU-11 to an ONU-nm in FIG. 3).

Certainly, FIG. 3 is merely a diagram of a possible passive optical network, and this should not constitute any limitation on a device type, a device quantity, and the like included in the passive optical network. For example, one or more of the plurality of ONUs in FIG. 3 may alternatively be implemented by the ONT.

Specifically, when a signal is transmitted in a downstream direction in the PON 20, the broadcast manner is no longer used. With reference to FIG. 3, in the downstream direction, the OLT 201 outputs optical signals including a plurality of different wavelengths (for example, including λ11 and λ12 to λnm), and simultaneously transmits the optical signals of different wavelengths to different ONUs (the ONU-11 to the ONU-nm) via 1:N wavelength division multiplexers WDM (the WDM 202-1, the WDM 202-2, and the WDM 202-3), so that any ONU can receive an optical signal of a specific wavelength. Similarly, in an upstream direction, the ONU-11 to the ONU-nm simultaneously output optical signals of specific wavelengths (including λ'11 to λ'nm), and the WDMs (the WDM 202-1, the WDM 202-2, and the WDM 202-3) multiplex the optical signals, and then transmit the multiplexed signals to the OLT 201.

In this case, in the foregoing solution, in the downstream direction, the optical signals of different wavelengths can be simultaneously transmitted to different ONUs. This effectively reduces a loss in a transmission process. Because a signal transmission process in the upstream direction is similar to that in the downstream direction, a loss can also be effectively reduced. In addition, because the plurality of ONUs communicate with the OLT by using the optical signals of the specific wavelengths, any ONU does not need to share a slot with another ONU, so that the transmission rate and the bandwidth of the PON are greatly increased.

However, because the WDM is unidirectional transmission, corresponding optical fibers need to be respectively deployed in the upstream and downstream directions in the foregoing solution, which increases deployment costs of a communication network additionally. In addition, a transmitter that can output the optical signal of the specific wavelength needs to be deployed in the OLT, and a corresponding apparatus or device that can implement functions of receiving and sending the optical signal of the specific wavelength also needs to be deployed in the ONU, which greatly increases costs. In addition, in the foregoing solution, a control system for controlling and stabilizing the optical signals of different wavelengths further needs to be deployed, which greatly increases costs.

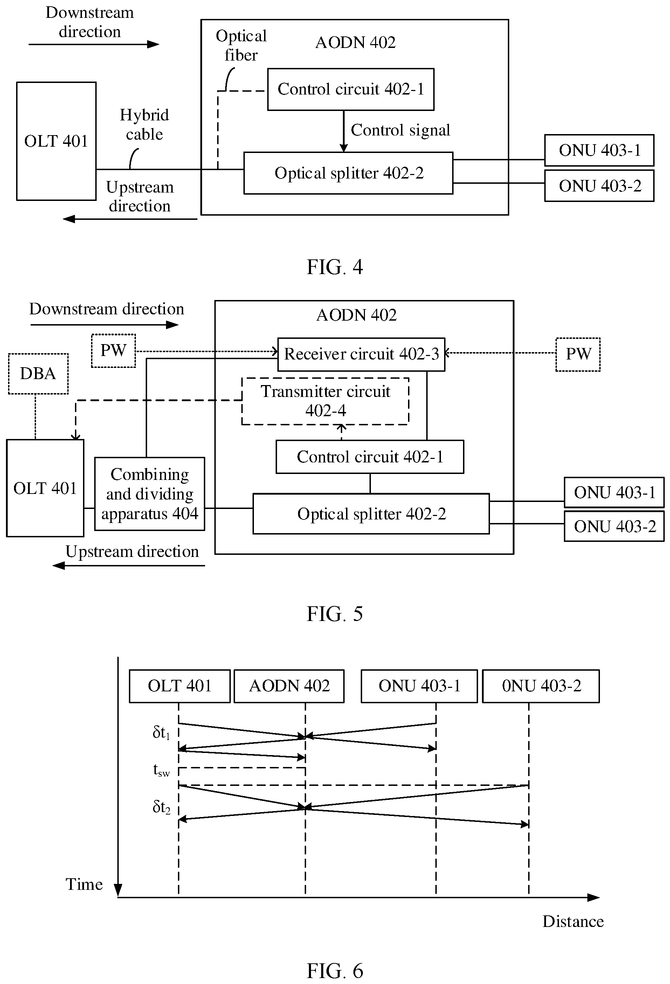

Based on the foregoing problems, an embodiment of this application provides a signal processing apparatus, to reduce a transmission loss of an optical network. For example, FIG. 4 is a diagram of a signal processing apparatus according to an embodiment of this application. The signal processing apparatus is an active optical distribution network (active optical distribution network, AODN). For ease of description, the signal processing apparatus is marked as an AODN 402. With reference to FIG. 4, the AODN 402 includes a control circuit 402-1 and an optical splitter 402-2. The optical splitter 402-2 includes one common port and a plurality of branch ports (for example, a first branch port and a second branch port). Specifically, with reference to FIG. 4, the common port of the optical splitter 402-2 is connected to an OLT 401 via a hybrid cable, the first branch port of the optical splitter 402-2 is connected to an ONU 403-1, and the second branch port of the optical splitter 402-2 is connected to an ONU 403-2.

It should be noted that the AODN may be connected to the OLT via a plurality of connection media, for example, the hybrid cable shown in FIG. 4. In some other examples, the AODN may alternatively be connected to the OLT via an optical fiber. In this way, the control circuit also needs to be connected to the OLT via the optical fiber.

For ease of description, only the signal processing apparatus shown in FIG. 4 is used as an example herein, and this should not constitute any limitation on a connection relationship and the like of the signal processing apparatus provided in embodiments of this application. For example, the signal processing apparatus may further include more ONUs connected to branch ports of the optical splitter. In a possible implementation, the ONU may further include a transmission container (transmission container, T-CONT) module that carries services in an upstream direction. The T-CONT module can be configured to identify an ID of the T-CONT module, and control the ONU to send an optical signal in an allocated slot in the upstream direction.

Based on the foregoing structure, in terms of functions, the apparatus can implement that the control circuit 402-1 sends a first control signal to the optical splitter 402-2. The optical splitter 402-2 connects the common port of the optical splitter 402-2 to the first branch port of the optical splitter 402-2 in response to the first control signal. The control circuit 402-1 sends a second control signal to the optical splitter 402-2. The optical splitter 402-2 connects the common port of the optical splitter 402-2 to the second branch port of the optical splitter 402-2 in response to the second control signal.

Specifically, a downstream direction is used as an example. The OLT 401 outputs optical signals, the common port of the optical splitter 402-2 receives the optical signals transmitted by the OLT 401, the optical splitter 402-2 outputs, based on the first control signal, the received optical signal to the ONU 403-1 in a period of time through the first branch port connected to the common port, and the optical splitter 402-2 outputs, based on the second control signal, the received optical signal to the ONU 403-2 in another period of time through the second branch port connected to the common port. In this way, in a different time period, an optical signal output by the OLT 401 can be transmitted to a corresponding ONU through a branch port, that is, point-to-point transmission is implemented between the OLT and any ONU in the downstream direction.

In the upstream direction, the optical splitter 402-2 receives, through the first branch port, an optical signal transmitted by the ONU 403-1, and outputs, based on the first control signal, the received optical signal to the OLT 401 through the common port in a period of time; and the optical splitter 402-2 receives, through the second branch port, an optical signal transmitted by the ONU 403-2, and outputs, based on the second control signal, the received optical signal to the OLT 401 through the common port in another period of time. In this way, in different time periods, different ONUs are connected to the OLT, and transmit optical signals to the OLT 401, that is, point-to-point transmission is implemented between any ONU and the OLT in the upstream direction.

Based on the foregoing descriptions, in the foregoing solution, the optical signal output by the OLT does not need to be split, and the optical signal received from the OLT can be output to an ONU (connected to a branch port) in a different time period through the branch port connected to the common port. This greatly reduces a transmission loss. In addition, in different time periods, different ONUs are connected to the OLT through branch ports connected to common ports. In addition, in this case, other branch ports are all disconnected from the common ports of the ONUs. Therefore, in different time periods, the optical signals output by different ONUs can all be transmitted to the OLT. This avoids occurrence of the rogue ONU and effectively improves transmission quality.

It is not difficult to understand that the OLT is generally connected to the optical distribution network ODN via an optical fiber, and a length of the deployed optical fiber is usually long, for example, 10 km. In this case, the signal processing apparatus AODN can be deployed at a location close to an end user, for example, an entrance of an enterprise campus, an entrance of a residential community, or an entrance of a building, so that a quantity of optical fibers used in the communication network can be reduced to a maximum extent, costs can be reduced, and a construction risk can be reduced.

Based on the architecture shown in FIG. 4, for example, FIG. 5 is a diagram of a signal processing apparatus according to an embodiment of this application. Based on the architecture shown in FIG. 4, as shown in FIG. 5, the AODN 402 further includes a receiver circuit 402-3, and the receiver circuit 402-3 is configured to connect to the OLT 401.

It is not difficult to understand that FIG. 5 is merely a diagram of a structure of a signal processing apparatus according to this application. For example, a combining and dividing apparatus 404 in FIG. 5 may also be deployed inside the signal processing apparatus. For another example, a combining and dividing apparatus 404 may further reuse another device or apparatus in the communication network to implement a function of the combining and dividing apparatus 404. This is not limited in this application. In a possible implementation, the optical splitter 402-2 may further include more branch ports, configured to connect to more ONUs.

In a possible implementation, with reference to FIG. 5, the common port of the optical splitter 402-2 is connected to the OLT 401 via the combining and dividing apparatus 404. The combining and dividing apparatus 404 includes a common port, a first branch port, and a second branch port. The common port of the combining and dividing apparatus 404 is configured to connect to the OLT 401, the first branch port of the combining and dividing apparatus 404 is configured to connect to the common port of the optical splitter 402-2, and the second branch port of the combining and dividing apparatus 404 is configured to connect to the receiver circuit 402-3.

Specifically, a downstream direction is used as an example. The OLT 401 outputs an optical signal, and the optical signal is separately transmitted to the optical splitter 402-2 and the receiver circuit 402-3 via the combining and dividing apparatus 404. The receiver circuit 402-3 receives an optical signal sent by the OLT 401, and obtains port allocation information carried in the optical signal. The receiver circuit 402-3 sends the port allocation information to the control circuit 402-1. The control circuit 402-1 generates control signals based on the port allocation information, and outputs the control signals to the optical splitter 402-2. In response to the control signals generated by the control circuit 402-1, the optical splitter 402-2 connects the common port to the first branch port in an indicated first slot, in other words, connects the OLT 401 to the ONU 403-1 in the first slot; and connects the common port to the second branch port in an indicated second slot, in other words, connects the OLT 401 to the ONU 403-2 in the second slot.

Optionally, with reference to FIG. 5, the AODN 402 further includes a transmitter circuit 402-4, and the transmitter circuit 402-4 is configured to connect to the OLT 401. The optical splitter 402-2 is further configured to send detection results of optical signals of the plurality of branch ports to the control circuit 402-1, where the detection result may be parameters (including optical power and optical intensity) of the optical signal detected at each branch port. Generally, a detection circuit (for example, may be an optical-to-electrical conversion circuit including a PD) disposed at each branch port of the optical splitter 402-2 is used to detect the optical signal of the branch port, so that the parameters of the optical signal at each branch port can be obtained, thereby obtaining the detection results. The control circuit 402-1 is further configured to send port status information to the transmitter circuit 402-4 based on the detection results, where the port status information indicates connectivity statuses between the plurality of branch ports and the common port. For example, optical power at a branch port is detected, and it can be determined that a connection between the branch port and the common port is abnormal by determining that the optical power (which is excessively small or even zero) does not reach a reference value. For another example, whether a branch port transmits an optical signal in a period of time indicated by the port allocation information can be determined based on detected optical intensity at the branch port. The transmitter circuit 402-4 is further configured to send the port status information to the OLT 401. It should be noted that, the receiver circuit 402-3 and the transmitter circuit 402-4 may be independent circuits, or may be integrated into a transceiver circuit having receiving and sending functions.

Optionally, a split ratio of the first branch port of the combining and dividing apparatus 404 is greater than a split ratio of the second branch port of the combining and dividing apparatus 404. For example, the combining and dividing apparatus may transmit, based on a split ratio of 1:99, an optical signal with an optical power proportion of 1% in the optical signal transmitted by the OLT to the optical splitter, and transmit an optical signal with an optical power proportion of 99% in the optical signal transmitted by the OLT to the receiver circuit.

Optionally, the receiver circuit 402-3 is an ONU. Certainly, the receiver circuit 402-3 may alternatively be implemented by another device or apparatus that can implement a function of the receiver circuit 402-3. An apparatus type, a product form, and the like of the receiver circuit are not limited in this application.

Optionally, the combining and dividing apparatus 404 includes an optical switch or a multiplexer/demultiplexer. For example, the combining and dividing apparatus 404 may be a passive unequal-split optical splitter. Certainly, the combining and dividing apparatus 404 may alternatively be implemented by another device or component that can implement a function of the combining and dividing apparatus 404. A device type and the like of the combining and dividing apparatus 404 are not limited in this application.

Optionally, the optical splitter 402-2 includes an optical switch. Because the control circuit 402-1 needs to control the optical switch in the optical splitter 402-2 to connect corresponding ports, power needs to be supplied to the control circuit 402-1. To control any optical switch in the optical splitter 402-2, at least one switching controller and one operating bias point controller are required, so that the optical splitter 402-2 connects a corresponding branch port. That is, the control circuit 402-1 needs to include at least two power supply outputs, to ensure that the switching controller and the operating bias point controller can work normally, thereby implementing control on the optical splitter. Based on this, power needs to be supplied to the control circuit 402-1 in the AODN 402 via a power supply device (power, PW).

Optionally, with reference to FIG. 5, the power supply device PW may obtain power locally or obtain power remotely from an OLT side, to resolve a power supply problem of the control circuit 402-1. Certainly, the power supply device PW may further supply power to the control circuit 402-1 from an ONU side. This is not limited in this application. In some other examples, the power supply problem of the control circuit 402-1 may alternatively be resolved by using a low-cost solution like a battery. For example, in a scenario in which requirements on a switching speed and a switching frequency of port connectivity of the optical splitter 402-2 are not high, power may be supplied to the control circuit 402-1 via the battery.

In a possible implementation, with reference to FIG. 5, the port allocation information carried in the optical signal is generated via a dynamic bandwidth allocation (dynamic bandwidth allocation, DBA) apparatus. The DBA apparatus may be connected to the OLT, or may be integrated into the OLT. This is not limited in this application. With the DBA apparatus, dynamic allocation of an upstream bandwidth can be completed within an extremely short (microsecond or millisecond-level) time interval, for example, dynamic allocation can be implemented in a slot of any ONU.

Optionally, the port allocation information includes slot indication information. For example, the port allocation information may include slot indication information indicating a plurality of slots (for example, the first slot and the second slot). In some other examples, the port allocation information may alternatively include a plurality of pieces of slot indication information indicating one slot (for example, the first slot or the second slot). This is not limited in embodiments of this application.

Based on the architecture shown in FIG. 5, for example, FIG. 6 is a diagram of signal transmission according to an embodiment of this application. A horizontal coordinate is a distance, and a vertical coordinate is time.

Specifically, with reference to FIG. 6, in a slot δt1, the optical splitter 402-2 in the AODN 402 connects the common port to the first branch port, the OLT 401 sends an optical signal to the ONU 403-1 in the downstream direction, and the optical signal is transmitted to the ONU 403-1 over the AODN 402. Similarly, in the slot δt1, the ONU 403-1 sends an optical signal to the OLT 401 in the upstream direction, and the optical signal is transmitted to the OLT 401 over the AODN 402. When the slot δt1 ends, the OLT 401 sends an optical signal to the AODN 402 in the downstream direction, and transmits the optical signal that carries the port allocation information to the AODN 402. Specifically, the receiver circuit 402-3 obtains the port allocation information from the optical signal received from the OLT 401, and sends the port allocation information to the control circuit 402-1, the control circuit 402-1 sends a control signal to the optical splitter 402-2, and the optical splitter 402-2 connects the common port to the second branch port based on the control signal, which takes time t_{sw}. After t_{sw}, in a slot δt2, the OLT 401 sends an optical signal to the ONU 403-2 in the downstream direction; and in the slot δt2, the ONU 403-2 sends an optical signal to the OLT 401 in the upstream direction. Generally, to meet a slot requirement of branch port polling, the optical splitter performs configuration, to be specific, time consumed for implementing switching between branch ports needs to be less than 1 µs.

It should be noted that a wavelength range occupied by the optical signal transmitted in the upstream direction is usually different from a wavelength range occupied by the optical signal in the downstream direction. Generally, a carrier wavelength of the optical signal in the downstream direction is 1490 nanometers (nanometer, nm), and a carrier wavelength of the optical signal in the upstream direction is 1310 nm. Optionally, the optical signal transmitted between the OLT and the ONU may further include service information, registration information, and the like. This is not limited herein.

Based on the architectures shown in FIG. 4 and FIG. 5, the signal processing apparatus provided in this application may be further deployed in the communication network in a serial connection manner, that is, a plurality of AODNs are cascaded (hierarchically connected) to implement networking of more users, so that a transmission distance of the communication network can be further extended.

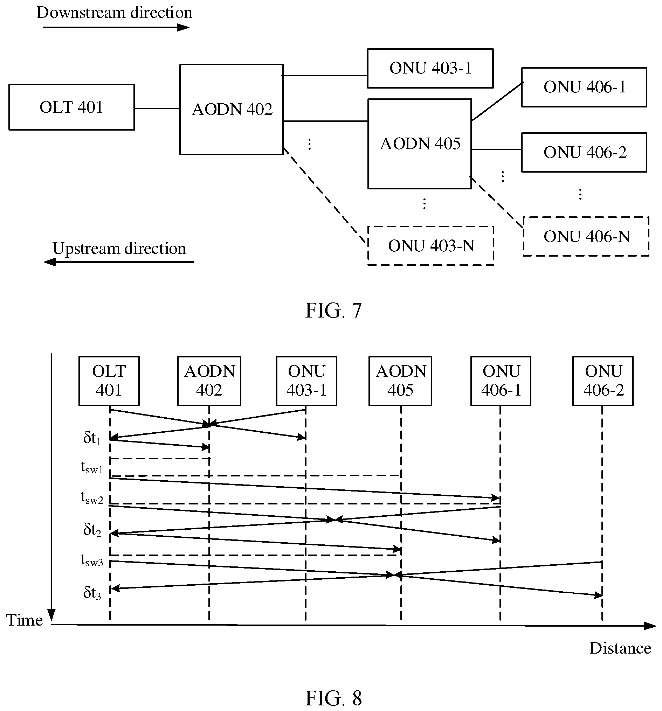

For example, FIG. 7 is a diagram of a communication network according to an embodiment of this application. With reference to FIG. 7, the communication network includes an OLT 401, a first-level AODN (AODN 402) directly connected to the OLT, an ONU 403-1, a second-level AODN (AODN 405) connected to a branch port of the AODN 402, and a plurality of ONUs (including the ONU 403-1 to an ONU 403-N and an ONU 406-1 to an ONU 406-N).

Specifically, the first-level AODN (namely, the AODN 402) includes one common port configured to connect to the OLT 401 and a plurality of branch ports connected to the ONUs (including the ONU 403-1 to the ONU 403-N). At least one branch port of the plurality of branch ports of the first-level AODN (AODN 402) is configured to connect to a common port of the second-level AODN (AODN 405). The AODN 405 includes the common port and a plurality of branch ports connected to the ONUs (including the ONU 406-1 to the ONU 406-N). The first-level AODN (AODN 402) allocates a slot in a plurality of slots of the second-level AODN (AODN 405) to the second-level AODN (AODN 405), and then the slot is divided into a plurality of sub-slots. It is not difficult to understand that, for internal structures of the AODN 402 and the AODN 405, refer to FIG. 4 and FIG. 5. Details are not described herein again. A control circuit in the AODN 405 may implement power supply locally, remotely, or in another possible manner. This is not limited in this application.

Specifically, with reference to FIG. 7, the OLT 401 outputs an optical signal in a downstream direction, where the optical signal carries port allocation information. The optical signal is transmitted to the AODN 402, and is transmitted by the AODN 402 to the AODN 405 connected to the branch port of the AODN 402. The AODN 405 connects the common port of the AODN 405 to the corresponding branch port in a corresponding period of time based on port allocation information carried in the optical signal, so that the OLT 401 is quickly connected to second-level ONUs (the ONU 406-1 and the ONU 406-2).

Based on the architecture shown in FIG. 7, for example, FIG. 8 is a diagram of signal transmission according to an embodiment of this application. A horizontal coordinate is a distance, and a vertical coordinate is time.

Specifically, with reference to FIG. 8, in a slot δt1, the OLT 401 transmits a signal to the ONU 403-1 over the AODN 402. After the slot δt1 ends, an optical splitter 402-2 in the AODN 402 connects a common port of the optical splitter 402-2 to another branch port (connected to the common port of the AODN 405), which takes time t_{sw1}. After t_{sw1}, the OLT 401 outputs an optical signal that carries the port allocation information of the AODN 405, and transmits the optical signal to the AODN 405 over the AODN 402. The AODN 405 takes t_{sw2} to complete configuration, that is, the AODN 405 connects the common port of the AODN 405 to the corresponding branch port (connected to the ONU 406-1) of the common port the AODN 405. After t_{sw2}, in a slot δt2, the ONU 406-1 communicates with the OLT 401. After the slot δt2 ends, the OLT 401 continues to output an optical signal that carries the port allocation information of the AODN 405, and the AODN 405 takes t_{sw3} to complete configuration, that is, the AODN 405 connects the common port of the AODN 405 to the corresponding branch port (connected to the ONU 406-2) of the AODN 405. After t_{sw3}, in the slot δt3, the ONU 406-2 communicates with the OLT 401.

It is not difficult to understand that, with reference to FIG. 7, because a distance between the AODN 405 and the OLT 401 is longer than a distance between the AODN 402 and the OLT 401, t_{sw1}<t_{sw2}. Similarly, because a distance between the ONU 406-1 and the OLT 401 is the same as a distance between the ONU 406-2 and the OLT 401, t_{sw2} and t_{sw3} are the same.

In this case, performing cascading (that is, hierarchically connecting the plurality of AODNs) via the signal processing apparatuses provided in this application can increase the transmission distance of the communication network, so that the communication network can implement networking of more users.

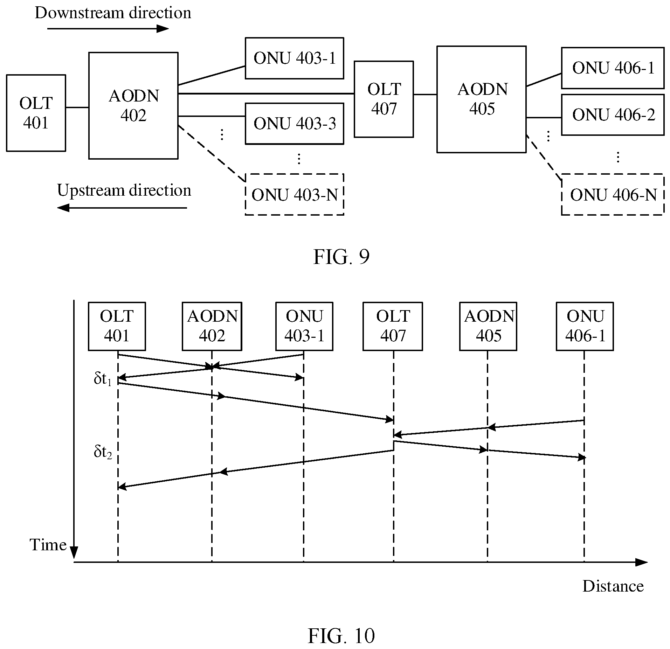

Based on the architecture shown in FIG. 7, one OLT may be further deployed between two cascaded AODNs, and is configured to amplify, in a transmission process, an optical signal transmitted by a first-level OLT (for example, the OLT 401). For example, FIG. 9 is a diagram of a communication network according to an embodiment of this application. Based on the architecture shown in FIG. 7, with reference to FIG. 9, the communication network further includes an OLT 407. One port of the OLT 407 is configured to connect to the AODN 402, and another port of the OLT 407 is configured to connect to the AODN 405.

Based on the architecture shown in FIG. 9, for example, FIG. 10 is a diagram of signal transmission according to an embodiment of this application. A horizontal coordinate is a distance, and a vertical coordinate is time. Specifically, with reference to FIG. 9 and FIG. 10, a downstream direction is used as an example. An optical signal output by the OLT 401 is transmitted to the OLT 407 over the AODN 402, and the OLT 407 receives the optical signal output by the OLT 401. The OLT 407 converts the received optical signal into an electrical signal and amplifies the electrical signal. Then, the OLT 407 converts the converted electrical signal into the optical signal (amplified) again through optical-to-electrical conversion. The optical signal is transmitted to different branch ports in different slots over the AODN 405. A signal transmission process in an upstream direction is similar to that in the downstream direction. Details are not described herein again.

In this case, in the foregoing solution, in the optical signal transmission process, the second-level OLT deployed between the two AODNs can implement relay amplification on the optical signal transmitted by the first-level OLT, so that a loss problem of the communication network is alleviated, and the transmission distance of the communication network can be further increased. Therefore, the communication network can support a longer transmission distance and allow access of more users. It is not difficult to understand that, because the optical signal is correspondingly converted (the optical signal-the electrical signal-the optical signal) in the transmission process, an extra conversion delay exists, and slot utilization is reduced.

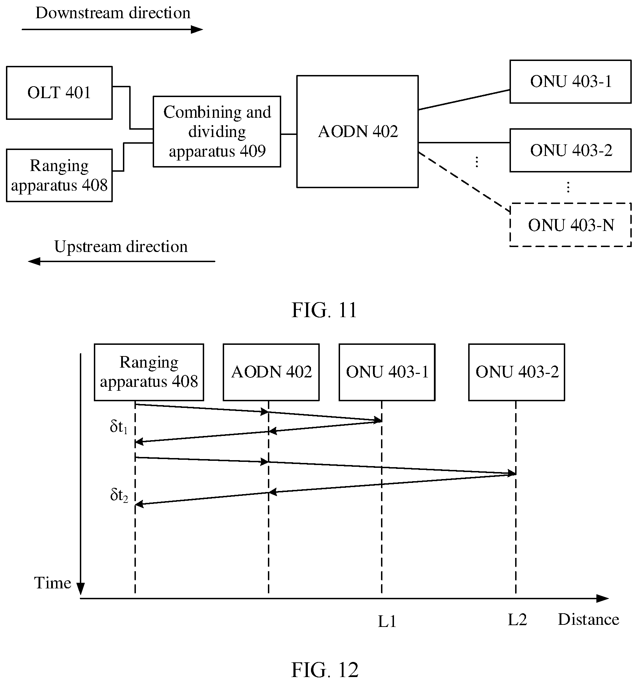

Based on the architectures shown in FIG. 4 and FIG. 5, a ranging apparatus used for ranging may be further deployed on the network side to perform ranging on the newly connected ONU. For example, FIG. 11 is a diagram of a communication network according to an embodiment of this application. Based on the architectures shown in FIG. 4 and FIG. 5, with reference to FIG. 11, the communication network further includes a ranging apparatus 408 and a combining and dividing apparatus 409. A first branch port of the combining and dividing apparatus 409 is configured to connect to the OLT 401, a second branch port of the combining and dividing apparatus 409 is configured to connect to the ranging apparatus 408, and a common port of the combining and dividing apparatus is configured to connect to the AODN 402.

It is not difficult to understand that, for ease of description, only the architecture of the communication network shown in FIG. 11 is used as an example herein, and this should not constitute any limitation on a quantity, a type, and the like of a device included in the communication network. In a possible implementation, the ranging apparatus 408 may be optical artificial intelligence (optical artificial intelligence, OAI). Certainly, the ranging apparatus may alternatively be implemented by another apparatus or device that can implement a ranging function. For example, the ranging apparatus may alternatively be an optical time-domain reflectometer (optical time-domain reflectometer, OTDR). In addition, the ranging apparatus may be an independent device, or may be integrated into another device. For example, the ranging apparatus 408 may be integrated inside the OLT 401. A device type, a product form, and the like of the ranging apparatus are not limited in this application.

Based on the architecture shown in FIG. 11, for example, FIG. 12 is a diagram of signal transmission according to an embodiment of this application. A horizontal coordinate is a distance, and a vertical coordinate is time.

Specifically, with reference to FIG. 11 and FIG. 12, during ranging, the OLT 401 does not output an optical signal. The ranging apparatus 408 sends an optical signal that carries port allocation information of the AODN, and controls the AODN 402 to perform port configuration, that is, the AODN 402 connects the common port of the AODN 402 to the corresponding branch port (connected to the ONU 403-1) (refer to descriptions in other embodiments of this application, and details are not described herein again). After port configuration of the AODN 402 is completed, the ranging apparatus 408 performs ranging. The ranging apparatus 408 sends an optical signal (also referred to as a ranging signal) used for ranging, and starts timing until the ranging signal is reflected back to the ranging apparatus and stops timing, which takes δt1. Certainly, a process in which the ranging apparatus 408 performs ranging on the ONU 403-2 is similar. Details are not described herein again. The ranging apparatus 408 performs ranging on the ONU 403-2, which takes δt2. Generally, a wavelength of the ranging signal is different from a wavelength of the optical signal output by the OLT 401.

A refractive index of the optical fiber is usually known. Therefore, a transmission speed of light in the optical fiber may be calculated. Then, distances (represented as L1 and L2) between the ONUs (ONU 403-1 and ONU 403-2) on an opposite side (namely, the user side) and (the ranging apparatus 408) on the network side can be accurately calculated by measuring delays (for example, δt1 and δt2) of the ranging signal transmitted and reflected back to the ranging apparatus. Further, based on the measured distance, it is convenient for the OLT 401 to control the AODN 402 to switch a connected branch port and synchronize start moments or end moments of output signals of devices on both sides (the network side and the user side).

In a possible implementation, the combining and dividing apparatus 409 in FIG. 11 may alternatively be a 2x1 optical switch. In this way, during ranging, only the optical switch needs to be switched to a ranging apparatus 408 side, so that the optical signal output by the ranging apparatus 408 can be transmitted, and the optical signal output by the OLT 401 is not transmitted. Therefore, in this case, the wavelength of the ranging signal output by the ranging apparatus 408 may be the same as the wavelength of the optical signal output by the OLT 401.

Generally, an optical iris technology is predominantly used for ranging. The solution includes: sending, on the network side, optical signals including different wavelengths; and setting fiber Bragg gratings of different cycles or similar structures on different ONUs on the user side, so that when the optical signals including different wavelengths are transmitted to the ONUs, the different ONUs reflect the optical signals, and a port ID (Identification) corresponding to a grating structure of the ONU is formed on the network side. The ONU is distinguished by using the port ID, and a distance between each ONU and the network side is determined by measuring a delay of an optical signal, transmitted and reflected back to the network side, of each wavelength.

In this case, in embodiments of this application, a directional ranging can be implemented on an ONU connected to each port, that is, only one ONU is measured during ranging. Therefore, in the foregoing solution, ranging can be implemented without relying on multi-wavelength colored light (including the optical signals of different wavelengths). This effectively reduces ranging costs.

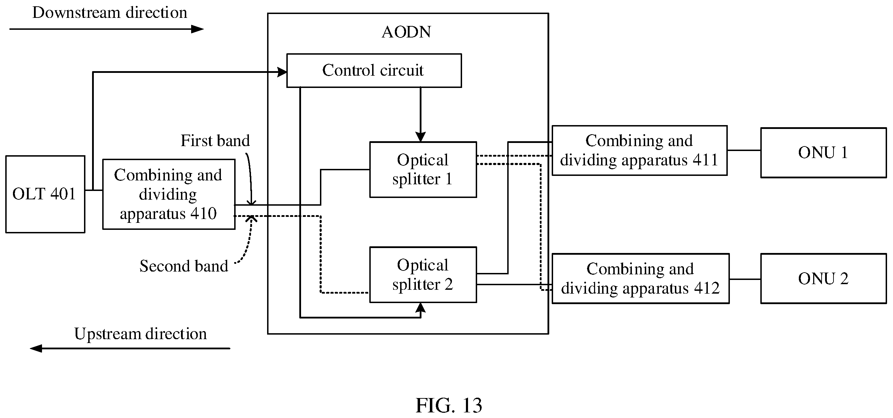

Based on the architectures shown in FIG. 4 and FIG. 5, the signal processing apparatus (AODN) provided in this application may further include a plurality of optical splitters, configured to separately control optical signal transmission in the upstream direction or optical signal transmission in the downstream direction. For example, FIG. 13 is a diagram of a communication network according to an embodiment of this application. As shown in FIG. 13, the communication network includes an OLT 401, an AODN, an ONU 1, an ONU 2, a combining and dividing apparatus 410, a combining and dividing apparatus 411, and a combining and dividing apparatus 412. The AODN includes a control circuit.

Certainly, in a possible implementation, with reference to FIG. 13, the AODN (refer to FIG. 4 or FIG. 5) may include a plurality of optical splitters, for example, an optical splitter 1 and an optical splitter 2. The optical splitter 1 and the optical splitter 2 may alternatively be optical switches.

For ease of description, only the architecture shown in FIG. 13 is used as an example herein, and this should not constitute any limitation on a quantity of devices included in the communication network and the like. For example, one or more of the combining and dividing apparatus 410, the combining and dividing apparatus 411, and the combining and dividing apparatus 412 may be deployed in the signal processing apparatus AODN. In a possible implementation, one or more of the combining and dividing apparatus 410, the combining and dividing apparatus 411, and the combining and dividing apparatus 412 may alternatively reuse another device or apparatus in the communication network to implement a function thereof, for example, reuse a combining and dividing apparatus already deployed in the communication network. Optionally, the user side of the communication network may further include more combining and dividing apparatuses (common ports are connected to ONUs), so that the AODN can be connected to more ONUs. Certainly, the user side of the communication network may further include more ONUs.

With reference to FIG. 13, a common port of the optical splitter 1 is connected to the OLT 401 via the combining and dividing apparatus 410, and a common port of the optical splitter 2 is configured to connect to the OLT 401 via the combining and dividing apparatus 410. A common port of the combining and dividing apparatus 410 is configured to connect to the OLT 401, a first branch port of the combining and dividing apparatus 410 is configured to connect to the common port of the optical splitter 1, and a second branch port of the combining and dividing apparatus 410 is configured to connect to the common port of the optical splitter 2. A first branch port of the optical splitter 1 is configured to connect a first branch port of the combining and dividing apparatus 411, and a second branch port of the optical splitter 1 is configured to connect a first branch port of the combining and dividing apparatus 412. A first branch port of the optical splitter 2 is configured to connect to a second branch port of the combining and dividing apparatus 411, and a second branch port of the optical splitter 2 is configured to connect to a second branch port of the combining and dividing apparatus 412. A common port of the combining and dividing apparatus 411 is configured to connect to the ONU 1, and a common port of the combining and dividing apparatus 412 is configured to connect to the ONU 2.

Specifically, the control circuit sends control signals to the optical splitter 1 and the optical splitter 2. In response to the control signals, the optical splitter 1 connects the common port of the optical splitter 1 to the first branch port of the optical splitter 1 in the first slot (that is, the OLT 401 is connected to the ONU 1), and connects the common port of the optical splitter 1 to the second branch port of the optical splitter 1 in the second slot (that is, the OLT 401 is connected to the ONU 2). In response to the control signals, the optical splitter 2 connects the common port of the optical splitter 2 to the first branch port of the optical splitter 2 in a third slot (that is, the OLT 401 is connected to the ONU 1), and connects the common port of the optical splitter 2 to the second branch port of the optical splitter 2 in a fourth slot (that is, the OLT 401 is connected to the ONU 2).

Optionally, an optical signal of a first band is transmitted between the common port of the combining and dividing apparatus 410 and the first branch port of the combining and dividing apparatus 410, and an optical signal of a second band is transmitted between the common port of the combining and dividing apparatus 410 and the second branch port of the combining and dividing apparatus 410, where the first band and the second band are non-overlapping. In a possible implementation, the optical signal of the first band transmitted between the common port of the combining and dividing apparatus 410 and the first branch port of the combining and dividing apparatus 410 is a downstream optical signal (transmitted in a downstream direction), and the optical signal of the second band transmitted between the common port of the combining and dividing apparatus 410 and the second branch port of the combining and dividing apparatus 410 is an upstream optical signal (transmitted in an upstream direction). Certainly, the optical signal of the first band and the optical signal of the second band may alternatively be optical signals of another possible type. This is not limited in this application.

Specifically, with reference to FIG. 13, in the downstream direction, a downstream optical signal output by the OLT 401 is transmitted by the combining and dividing apparatus 410 to the optical splitter 1, is transmitted to the ONU 1 via the optical splitter 1 and the combining and dividing apparatus 411 in the first slot, and is transmitted to the ONU 2 via the combining and dividing apparatus in the second slot. In the upstream direction, the ONU 1 outputs an upstream optical signal to the OLT 401 in the first slot, transmits the upstream optical signal to the optical splitter 1 via the combining and dividing apparatus 411, and transmits the upstream optical signal to the OLT 401 via the combining and dividing apparatus 410. The ONU 2 outputs an upstream optical signal to the OLT 401 in the second slot, transmits the upstream optical signal to the optical splitter 2 via the combining and dividing apparatus 412, and transmits the upstream optical signal to the OLT 401 via the combining and dividing apparatus 410.

In a possible implementation, the ONU on the user side can control the control circuit in the AODN, to control the optical splitter via the control circuit. In this way, one or more ONUs on the user side can actively output an upstream optical signal, thereby implementing active upstream transmission.

Therefore, in the foregoing embodiment, transmission of the optical signals can be separately controlled in the upstream direction and the downstream direction, so that the communication network can implement point-to-multipoint communication, a communication capacity of a communication system is fully utilized, and a working range of an optical splitter (for example, a wavelength range of the transmitted optical signal) can be expanded. In addition, complexity of the apparatus can be reduced, and a link loss can be reduced.

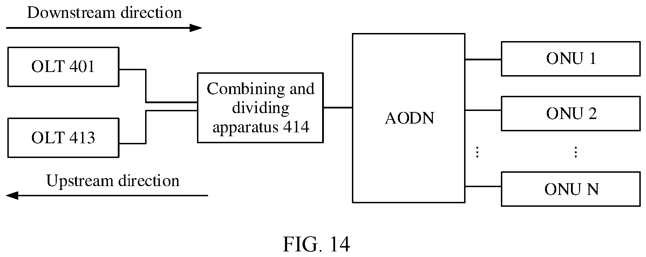

Based on the architectures shown in FIG. 4 and FIG. 5, a plurality of OLTs may be further deployed on the network side of the communication network, to adapt to different scenario requirements. For example, FIG. 14 is a diagram of a communication network according to an embodiment of this application. With reference to FIG. 14, the communication network includes an OLT 401, an AODN, a plurality of ONUs (including an ONU 1 to an ONU N), an OLT 413, and a combining and dividing apparatus 414.

A first branch port of the combining and dividing apparatus 414 is configured to connect to the OLT 401, a second branch port of the combining and dividing apparatus 414 is configured to connect to the OLT 413, and a common port of the combining and dividing apparatus 414 is configured to connect to the AODN. The AODN is connected to the N ONUs through a plurality of branch ports of the optical splitter. Details are not described herein again.

For ease of description, only the architecture shown in FIG. 14 is used as an example herein, and this should not constitute any limitation on a quantity of devices included in the communication network and the like. For example, the combining and dividing apparatus 414 may be deployed in the signal processing apparatus AODN. In a possible implementation, the combining and dividing apparatus 414 may alternatively reuse another device or apparatus in the communication network to implement a function of the combining and dividing apparatus 414, for example, reuse a combining and dividing apparatus already deployed in the communication network.

Specifically, with reference to FIG. 14, a downstream direction is used as an example. Optical signals output by the OLT 401 and the OLT 413 are multiplexed by the combining and dividing apparatus 414, and are simultaneously transmitted to the AODN, so that the optical signals are transmitted to corresponding ONUs in the plurality of ONUs in corresponding slots. For example, the optical signals output by the OLT 401 and the OLT 413 are transmitted to the ONU 1 in a first slot over the AODN, are transmitted to the ONU 2 in a second slot over the AODN, and can be transmitted to the ONU N in an N^{th} slot over the AODN 402. For a signal transmission process in an upstream direction, refer to the foregoing other embodiments. Details are not described herein again.

In this case, when the communication network includes the plurality of OLTs, in embodiments of this application, point-to-point communication between the plurality of OLTs and any ONU can be implemented over the deployed AODN. This effectively reduces complexity of the communication network, and reduces a transmission loss.

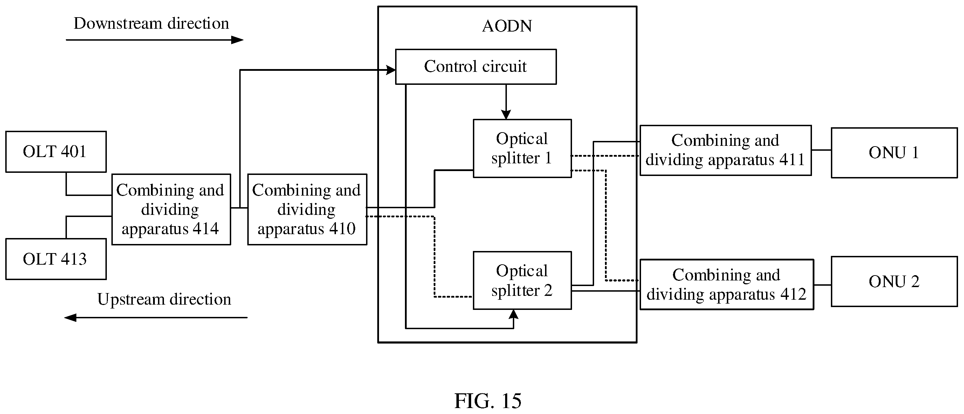

Based on the architectures shown in FIG. 13 and FIG. 14, the optical splitter in the AODN may further be implemented via one or more optical switches. For example, FIG. 15 is a diagram of a communication network according to an embodiment of this application. With reference to FIG. 15, the communication network includes an OLT 401, an AODN, a combining and dividing apparatus 410, a combining and dividing apparatus 411, a combining and dividing apparatus 412, an OLT 413, and a combining and dividing apparatus 414. In a possible implementation, the AODN includes a control circuit, an optical splitter 1, and an optical splitter 2.

One side of the AODN is connected to two OLTs (the OLT 401 and the OLT 413) via the combining and dividing apparatus 410 and the combining and dividing apparatus 414 in sequence. The other side of the AODN is connected to one or more ONUs via one or more combining and dividing apparatuses. For example, the other side of the AODN is connected to an ONU 1 via the combining and dividing apparatus 411, and is connected to an ONU 2 via the combining and dividing apparatus 412. For a specific connection relationship between the OLT 401, the OLT 413, the combining and dividing apparatus 410, the combining and dividing apparatus 414, the AODN, the combining and dividing apparatus 411, and the combining and dividing apparatus 412, refer to the descriptions in the foregoing embodiment of this application. Details are not described herein again.

For ease of description, only the architecture shown in FIG. 15 is used as an example herein, and this should not constitute any limitation on a quantity of devices included in the communication network and the like. For example, one or more of the combining and dividing apparatus 410, the combining and dividing apparatus 411, the combining and dividing apparatus 412, and the combining and dividing apparatus 414 may be deployed in the signal processing apparatus AODN. In a possible implementation, one or more of the combining and dividing apparatus 410, the combining and dividing apparatus 411, the combining and dividing apparatus 412, and the combining and dividing apparatus 414 may alternatively reuse another device or apparatus in the communication network to implement a function thereof, for example, reuse a combining and dividing apparatus already deployed in the communication network. Specifically, with reference to FIG. 15, in a downstream direction, the OLT 401 and the OLT 413 output optical signals. After being multiplexed by the combining and dividing apparatus 414 on the network side, the optical signals are simultaneously transmitted to the combining and dividing apparatus 410. After being split by the combining and dividing apparatus 410, the optical signals are transmitted to the AODN. The optical splitter 1 in the AODN performs port configuration based on control signals output by the control circuit, and transmits the received optical signals to the ONU 1 via the combining and dividing apparatus 411 on the user side and to the ONU 2 via the combining and dividing apparatus 412 on the user side. This implements signal transmission in the downstream direction. In an upstream direction, an optical signal output by the ONU 1 is transmitted to the optical splitter 2 in the AODN via the combining and dividing apparatus 411 on the user side, and then transmitted to the combining and dividing apparatus 414 via the combining and dividing apparatus 410, and finally transmitted to the OLT 401 and the OLT 413 separately. An optical signal output by the ONU 2 is transmitted to the optical splitter 2 in the AODN via the combining and dividing apparatus 412 on the user side, then transmitted to the combining and dividing apparatus 414 via the combining and dividing apparatus 410, and finally transmitted to the OLT 401 and the OLT 413 separately.

In this case, in embodiments of this application, a scenario including the plurality of OLTs can be adapted, and signal transmission in the upstream direction and the downstream direction can be separately controlled via the plurality of optical splitters in the AODN.

It should be noted that the optical splitting mode shown in FIG. 15 is only a possible optical splitting mode in this application, and implementations, optical splitting modes, split ratios, and the like of combining and dividing apparatuses (including the combining and dividing apparatus 410, the combining and dividing apparatus 411, the combining and dividing apparatus 412, and the combining and dividing apparatus 414) are not limited in this application. In some other examples, the optical splitter in the AODN may alternatively include one or more optical switches.

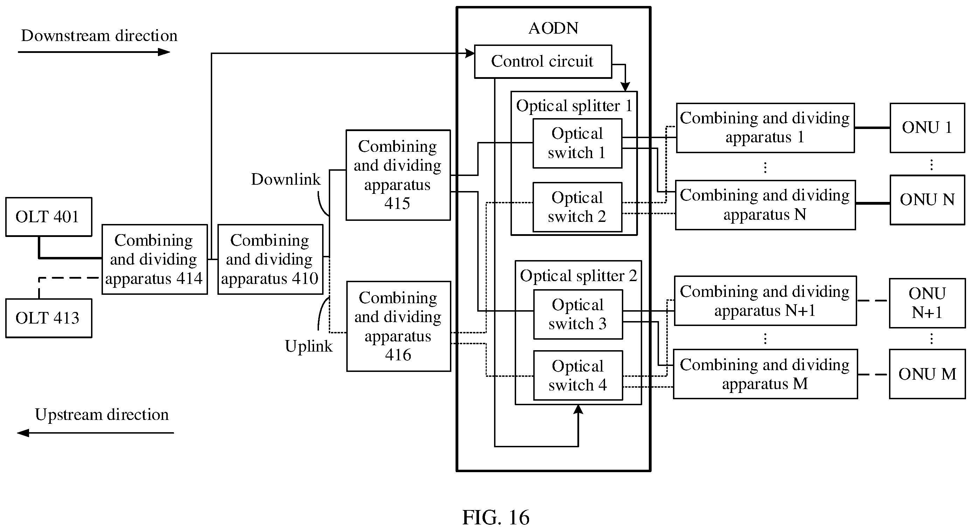

Based on the architecture shown in FIG. 15, for example, FIG. 16 is a diagram of a communication network according to an embodiment of this application. With reference to FIG. 16, the communication network includes an OLT 401, an AODN, a combining and dividing apparatus 410, an OLT 413, a combining and dividing apparatus 414, a combining and dividing apparatus 415, a combining and dividing apparatus 416, a plurality of combining and dividing apparatuses (a combining and dividing apparatus 1 to a combining and dividing apparatus M), and a plurality of ONUs (including an ONU 1 to an ONU M). Optionally, the AODN includes a control circuit, an optical splitter 1, and an optical splitter 2, and each of the optical splitter 1 and the optical splitter 2 includes two optical switches, namely, an optical switch 1 to an optical switch 4. The optical switch 1 is separately connected to the combining and dividing apparatus 1 to the combining and dividing apparatus N, the optical switch 2 is separately connected to the combining and dividing apparatus 1 to the combining and dividing apparatus N, the optical switch 3 is separately connected to the combining and dividing apparatus N+1 to the combining and dividing apparatus M, and the optical switch 4 is separately connected to the combining and dividing apparatus N+1 to the combining and dividing apparatus M.

For ease of description, only the architecture shown in FIG. 16 is used as an example herein, and this should not constitute any limitation on a quantity of devices included in the communication network and the like. For example, one or more of the combining and dividing apparatus 410, the combining and dividing apparatus 414, the combining and dividing apparatus 415, the combining and dividing apparatus 416, and the plurality of combining and dividing apparatuses (the combining and dividing apparatus 1 to the combining and dividing apparatus M) may be deployed in the signal processing apparatus AODN. In a possible implementation, one or more of the combining and dividing apparatus 410, the combining and dividing apparatus 414, the combining and dividing apparatus 415, the combining and dividing apparatus 416, and the plurality of combining and dividing apparatuses (the combining and dividing apparatus 1 to the combining and dividing apparatus M) may alternatively reuse another device or apparatus in the communication network to implement a function thereof, for example, reuse a combining and dividing apparatus already deployed in the communication network.

Specifically, with reference to FIG. 16, in a downstream direction, the OLT 401 and the OLT 413 output optical signals to the combining and dividing apparatus 414 on the network side, and the combining and dividing apparatus 414 multiplexes the optical signals, and transmits the signals to the combining and dividing apparatus 410. The combining and dividing apparatus 410 receives the optical signals, splits the optical signals, and transmits the optical signals to the combining and dividing apparatus 415. The combining and dividing apparatus 415 further splits the optical signals, transmits the optical signal output by the OLT 401 to the optical switch 1 in the optical splitter 1, and transmits the optical signal output by the OLT 413 to the optical switch 3 in the optical splitter 2. Further, the optical switch 1 transmits the received optical signal to the combining and dividing apparatus 1 to the combining and dividing apparatus N, to separately transmit the optical signal to the ONU 1 to the ONU N; and the optical switch 3 transmits the received optical signal to the combining and dividing apparatus N+1 to the combining and dividing apparatus M, to separately transmit the optical signal to the ONU N+1 to the ONU M. In this way, the optical signal output by the OLT 401 can be separately transmitted to different ONUs (the ONU 1 to ONU N) via the optical switch 1, and the optical signal output by the OLT 413 can be separately transmitted to different ONUs (the ONU N+1 to the ONU M) via the optical switch 3.

In an upstream direction, optical signals output by the ONU 1 to the ONU N are transmitted to the optical switch 2 via the combining and dividing apparatus 1 to the combining and dividing apparatus N, and are transmitted to the combining and dividing apparatus 416 via the switch 2. The combining and dividing apparatus 416 transmits the received optical signals to the combining and dividing apparatus 410, and the combining and dividing apparatus 410 transmits the optical signals to the combining and dividing apparatus 414, and then to the OLT 401. Optical signals output by the ONU N+1 to the ONU M are transmitted to the optical switch 4 via the combining and dividing apparatus N+1 to the combining and dividing apparatus M, and are transmitted to the combining and dividing apparatus 416 via the switch 4. The combining and dividing apparatus 416 transmits the received optical signals to the combining and dividing apparatus 410, and the combining and dividing apparatus 410 transmits the optical signals to the combining and dividing apparatus 414, and then to the OLT 413.

In this case, in the foregoing embodiment, optical signals output by a plurality of OLTs can be transmitted to different ONUs, and optical signals output by different ONUs can also be simultaneously transmitted to the OLTs. That is, in the scenario including the plurality of OLTs, in the foregoing embodiment, point-to-multipoint signal transmission between any OLT and the plurality of ONUs can be implemented in the downstream direction and the upstream direction.

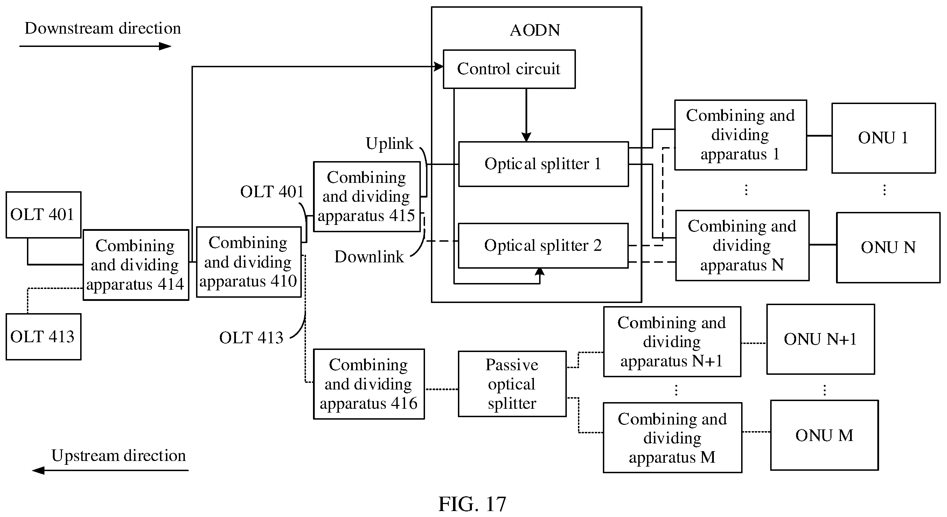

Certainly, the architecture of the communication network in the foregoing embodiment of this application may alternatively be compatible with an architecture of a conventional passive communication network. For example, FIG. 17 is a diagram of a communication network according to an embodiment of this application. In the communication network, at least one of a plurality of OLTs is configured to connect to an AODN, and a remaining OLT may implement signal transmission over a connected conventional passive network. With reference to FIG. 17, the communication network includes an OLT 401, the AODN, a combining and dividing apparatus 410, an OLT 413, a combining and dividing apparatus 414, a combining and dividing apparatus 415, a combining and dividing apparatus 416, a passive optical splitter, a plurality of combining and dividing apparatuses (a combining and dividing apparatus 1 to a combining and dividing apparatus M), and a plurality of ONUs (including an ONU 1 to an ONU M). The AODN includes two optical splitters, namely, an optical splitter 1 and an optical splitter 2.

For ease of description, only the communication network shown in FIG. 17 is used as an example herein, and an implementation, an optical splitting mode, a split ratio, and the like of the combining and dividing apparatus are not limited in this application. For example, one or more of the combining and dividing apparatus 410, the combining and dividing apparatus 414, the combining and dividing apparatus 415, the combining and dividing apparatus 416, and the plurality of combining and dividing apparatuses (the combining and dividing apparatus 1 to the combining and dividing apparatus M) may be deployed in the signal processing apparatus AODN. In a possible implementation, one or more of the combining and dividing apparatus 410, the combining and dividing apparatus 414, the combining and dividing apparatus 415, the combining and dividing apparatus 416, and the plurality of combining and dividing apparatuses (the combining and dividing apparatus 1 to the combining and dividing apparatus M) may alternatively reuse another device or apparatus in the communication network to implement a function thereof, for example, reuse a combining and dividing apparatus already deployed in the communication network.

Specifically, with reference to FIG. 17, in a downstream direction, optical signals output by the OLT 401 and the OLT 413 are multiplexed by the combining and dividing apparatus 414 on the network side, and are transmitted to the combining and dividing apparatus 410. The combining and dividing apparatus 410 performs optical splitting, transmits the optical signal output by the OLT 401 to the AODN, and transmits the optical signal output by the OLT 413 to the combining and dividing apparatus 416. The AODN receives the optical signal output by the OLT 401, and controls, based on a control signal output by the control circuit, the optical splitter 1 to perform port configuration. That is, the optical splitter 1 transmits the received optical signal to the ONU 1 via the combining and dividing apparatus 1 on the user side, and transmits the received optical signal to the ONU 2 via the combining and dividing apparatus 2 on the user side. By analogy, the optical splitter 1 transmits the received optical signal to the ONU N via the combining and dividing apparatus N on the user side. For signal transmission of the AODN in an upstream direction, refer to the foregoing transmission process. Details are not described herein again. In addition, the combining and dividing apparatus 416 receives the optical signal output by the OLT 413, and transmits the optical signal to the passive optical splitter. The passive optical splitter separately transmits the received optical signal to the combining and dividing apparatus N+1 to the combining and dividing apparatus M. The combining and dividing apparatus N+1 on the user side transmits the received optical signal to the ONU N+1. By analogy, the combining and dividing apparatus M on the user side transmits the received optical signal to the ONU M.

It should be noted that, in the upstream direction, a plurality of ONUs (including the ONU N+1 to the ONU M) included in the architecture of the passive communication network sequentially output optical signals to the passive optical splitter in allocated slots corresponding to the ONUs. Specifically, the passive optical splitter transmits an optical signal output by an ONU (for example, the ONU N+1) to the combining and dividing apparatus 416 in a first slot, the combining and dividing apparatus 416 transmits the optical signal to the combining and dividing apparatus 410, then the combining and dividing apparatus 410 transmits the optical signal to the combining and dividing apparatus 414, and finally to the OLT 413. For signal transmission of the ONU N+2 to the ONU M in the upstream direction, refer to the foregoing transmission process. Details are not described herein again.

In this way, in the foregoing solution, optical signals output by different OLTs can be separately transmitted via an active communication network and the passive communication network, that is, an architecture of the active communication network in the foregoing embodiment can be compatible with the architecture of the conventional passive communication network. In this case, the foregoing solution can make the signal processing apparatus more compatible, and can reduce device deployment, thereby effectively reducing the deployment costs of the communication network.

Based on the foregoing architecture, for example, an embodiment of this application provides a communication method. The following describes in detail the communication method provided in embodiments of this application. It should be noted that the communication method provided in embodiments of this application is described herein by using the architecture shown in FIG. 4 as an example, and using the control circuit 402-1 and the optical splitter 402-2 as an example, and this should not constitute any limitation on the communication method provided in embodiments of this application. The communication method is applied to a signal processing apparatus, and includes step 501 to step 504. Specific descriptions are as follows:
Step 501: A control circuit sends a first control signal to an optical splitter.

With reference to FIG. 4, the control circuit 402-1 sends the first control signal to the optical splitter 402-2.

In a possible implementation, the control circuit receives port allocation information carried in an optical signal output by an OLT, and generates the first control signal based on the port allocation information.

Step 502: Connect a common port of the optical splitter to a first branch port of the optical splitter.

With reference to FIG. 4, the common port of the optical splitter 402-2 is connected to the first branch port of the optical splitter 402-2. Specifically, the optical splitter 402-2 outputs, in a first slot based on the first control signal, the optical signal that is transmitted by the OLT 401 and received by the common port of the optical splitter 402-2, to the ONU 403-1 through the first branch port connected to the common port.

Step 503: The control circuit sends a second control signal to the optical splitter.

With reference to FIG. 4, the control circuit 402-1 sends the second control signal to the optical splitter 402-2.

In a possible implementation, the control circuit receives the port allocation information carried in the optical signal output by the OLT, and generates the second control signal based on the port allocation information.

Step 504: Connect the common port of the optical splitter to a second branch port of the optical splitter.

With reference to FIG. 4, the common port of the optical splitter 402-2 is connected to the second branch port of the optical splitter 402-2. Specifically, the optical splitter 402-2 outputs, in the second slot based on the second control signal, the optical signal that is transmitted by the OLT 401 and received by the common port of the optical splitter 402-2, to the ONU 403-2 through the second branch port connected to the common port.

In this case, in this embodiment of this application, the OLT can be connected to different ONUs through different branch ports in different time periods, so that the optical signal output by the OLT is output to the different ONUs in different time periods. This reduces a transmission loss of the communication network.

It should be noted that one or more combining and dividing apparatuses (for example, the combining and dividing apparatus 410 and the combining and dividing apparatus 414) in the foregoing embodiments of this application may be integrated into a chip (that is, an integrated circuit integrated in a chip), or may be integrated outside a chip (that is, an integrated circuit integrated outside a chip), for example, integrated into an external device. In a possible implementation, the one or more combining and dividing apparatuses in the foregoing embodiments of this application may be implemented by a demultiplexer/multiplexer (demultiplexer/multiplexer, also referred to as demux). An implementation, a product form, and the like of the combining and dividing apparatus are not limited in embodiments of this application.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the appended claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A signal processing apparatus, comprising a control circuit and a first optical splitter, wherein
the first optical splitter comprises a common port and a plurality of branch ports, wherein the common port of the first optical splitter is configured to connect to a first optical line terminal, a first branch port of the plurality of branch ports of the first optical splitter is configured to connect to a first optical network unit, and a second branch port of the plurality of branch ports of the first optical splitter is configured to connect to a second optical network unit;
the control circuit is configured to send a first control signal to the first optical splitter;
the first optical splitter is configured to connect the common port of the first optical splitter to the first branch port of the first optical splitter in response to the first control signal;
the control circuit is further configured to send a second control signal to the first optical splitter; and
the first optical splitter is configured to connect the common port of the first optical splitter to the second branch port of the first optical splitter in response to the second control signal.

2. The signal processing apparatus according to claim 1, wherein the signal processing apparatus further comprises a receiver circuit, and the receiver circuit is configured to connect to the first optical line terminal;
the receiver circuit is configured to receive a first optical signal sent by the first optical line terminal, wherein the first optical signal carries port allocation information;
the receiver circuit is further configured to: obtain the port allocation information from the first optical signal, and send the port allocation information to the control circuit; and
the control circuit is specifically configured to generate the first control signal and the second control signal based on the port allocation information.

3. The signal processing apparatus according to claim 1 or 2, wherein the signal processing apparatus further comprises a transmitter circuit, and the transmitter circuit is configured to connect to the first optical line terminal;
the first optical splitter is further configured to send detection results of optical signals of the plurality of branch ports to the control circuit; and
the control circuit is further configured to send port status information to the first optical line terminal based on the detection results via the transmitter circuit.

4. The signal processing apparatus according to any one of claims 1 to 3, wherein
the first optical splitter is configured to: in response to the first control signal, connect the common port to the first branch port in a first slot; and in response to the second control signal, connect the common port to the second branch port in a second slot indicated by the port allocation information.

5. The signal processing apparatus according to claim 2, wherein the common port of the first optical splitter is configured to connect to the first optical line terminal via a first combining and dividing apparatus; and
the first combining and dividing apparatus comprises a common port, a first branch port, and a second branch port, wherein the common port of the first combining and dividing apparatus is configured to connect to the first optical line terminal, the first branch port of the first combining and dividing apparatus is configured to connect to the common port of the first optical splitter, and the second branch port of the first combining and dividing apparatus is configured to connect to the receiver circuit.

6. The signal processing apparatus according to claim 5, wherein a split ratio of the first branch port of the first combining and dividing apparatus is greater than a split ratio of the second branch port of the first combining and dividing apparatus.

7. The signal processing apparatus according to claim 5, wherein the first combining and dividing apparatus comprises an optical switch or a multiplexer/demultiplexer.

8. The signal processing apparatus according to any one of claims 1 to 4, wherein the signal processing apparatus further comprises a second optical splitter;
the second optical splitter comprises a common port and a plurality of branch ports, wherein the common port of the second optical splitter is configured to connect to the first optical line terminal via a second combining and dividing apparatus, a first branch port of the plurality of branch ports of the second optical splitter is configured to connect to a first branch port of a third combining and dividing apparatus, and a second branch port of the plurality of branch ports of the second optical splitter is configured to connect to a first branch port of a fourth combining and dividing apparatus;
the first optical splitter comprises the common port and the plurality of branch ports, wherein the common port of the first optical splitter is configured to connect to the first optical line terminal via the second combining and dividing apparatus, the first branch port of the plurality of branch ports of the first optical splitter is configured to connect to a second branch port of the third combining and dividing apparatus, and the second branch port of the plurality of branch ports of the first optical splitter is configured to connect to a second branch port of the fourth combining and dividing apparatus;
a common port of the third combining and dividing apparatus is configured to connect to the first optical network unit;
a common port of the fourth combining and dividing apparatus is configured to connect to the second optical network unit;
the control circuit is further configured to send a third control signal to the second optical splitter;
the second optical splitter is configured to connect the common port of the second optical splitter to the first branch port of the second optical splitter in response to the third control signal;
the control circuit is further configured to send a fourth control signal to the second optical splitter; and
the second optical splitter is configured to connect the common port of the second optical splitter to the second branch port of the second optical splitter in response to the fourth control signal.

9. The signal processing apparatus according to claim 8, wherein
an optical signal of a first band is transmitted between a common port of the second combining and dividing apparatus and a first branch port of the second combining and dividing apparatus; and an optical signal of a second band is transmitted between the common port of the second combining and dividing apparatus and a second branch port of the second combining and dividing apparatus, wherein
the first band and the second band are non-overlapping.

10. The signal processing apparatus according to any one of claims 1 to 7, wherein the first optical splitter comprises an optical switch.

11. The signal processing apparatus according to claim 8 or 9, wherein the second optical splitter comprises an optical switch.

12. An optical network, wherein the optical network comprises a first optical line terminal, a first optical network unit, a second optical network unit, and the signal processing apparatus according to any one of claims 1 to 7.

13. An optical network, wherein the optical network comprises a first optical line terminal, a second combining and dividing apparatus, a third combining and dividing apparatus, a fourth combining and dividing apparatus, a first optical network unit, a second optical network unit, and the signal processing apparatus according to claim 8 or 9.

14. The optical network according to claim 12 or 13, wherein the optical network further comprises a second optical line terminal and a fifth combining and dividing apparatus; and
a first branch port of the fifth combining and dividing apparatus is configured to connect to the first optical line terminal, a second branch port of the fifth combining and dividing apparatus is configured to connect to the second optical line terminal, and a common port of the fifth combining and dividing apparatus is configured to connect to the signal processing apparatus.

15. The optical network according to claim 12 or 13, wherein the optical network further comprises a ranging apparatus and a sixth combining and dividing apparatus; and
a first branch port of the sixth combining and dividing apparatus is configured to connect to the first optical line terminal, a second branch port of the sixth combining and dividing apparatus is configured to connect to the ranging apparatus, and a common port of the sixth combining and dividing apparatus is configured to connect to the signal processing apparatus.
